# DEMANDE DE BREVET EUROPEEN

(11) **EP 2 743 757 A1**
(43) Date de publication de la demande: **18.06.2014**
(21) Numéro de dépôt: 13196811.7
(22) Date de dépôt: 12.12.2013
(51) Int. Cl.: G02F 1/1335, G02F 1/13363, G02B 27/28

(54) **Rotateur de polarisation à faible ellipticité induite**

(30) Priorité: 13.12.2012 FR 1262014
(71) Demandeur: Commissariat à l'Énergie Atomique et aux Énergies Alternatives, 75015 Paris (FR)
(72) Inventeur: Rossini, Umberto, 38500 Coublevie (FR); Favier, Maxime, 91440 Bures-sur-Yvette (FR); Le Calvez, Stéphanie, 38360 Sassenage (FR); Morales, Sophie, 38760 Varces (FR)
(74) Mandataire: Augarde, Eric

(57) **Abrégé**

L'invention concerne un rotateur de polarisation à faible ellipticité de polarisation. Le rotateur comprend un premier bloc optique (401) et un second optique (402) sur un axe optique commun. Le premier bloc optique (401) est constitué par un polariseur rectiligne (105) et une première lame quart d'onde (110), la direction de polarisation du polariseur étant bissectrice des axes neutres de la première lame quart d'onde. Le second bloc optique (402) est constitué par une lame à retard variable (120) et une seconde lame quart d'onde (130), les axes neutres de la seconde lame quart d'onde étant bissecteurs des axes neutres de lame à retard variable.

## Description

### DOMAINE TECHNIQUE

La présente invention concerne de manière générale les rotateurs de polarisation.

### ÉTAT DE LA TECHNIQUE ANTÉRIEURE

Les rotateurs de polarisation sont des dispositifs optiques qui permettent de faire tourner les axes d'une polarisation elliptique, en particulier la direction de polarisation d'une onde polarisée rectilignement selon un angle de rotation prédéterminé.

Certains rotateurs de polarisation présentent des éléments dont l'orientation angulaire est pilotée (par exemple au moyen d'un moteur pas à pas) de manière à pouvoir contrôler l'angle de rotation de la polarisation.

Plus récemment ont été proposés des rotateurs de polarisation à cristaux liquides. Ces rotateurs de polarisation présentent notamment l'avantage de ne pas comporter d'élément mécanique mobile et d'être facilement miniaturisable. Ils possèdent également une faible signature magnétique et sont donc particulièrement adaptés à la magnétométrie.

On trouvera une description d'un rotateur de polarisation à cristal liquide dans l'article de I. Moreno et al. intitulé « Two-dimensional polarization rotator using a twisted-nematic liquid-crystal display », publié dans Applied Optics, vol. 46, N° 6, 20 Février 2007, pages 881-887.

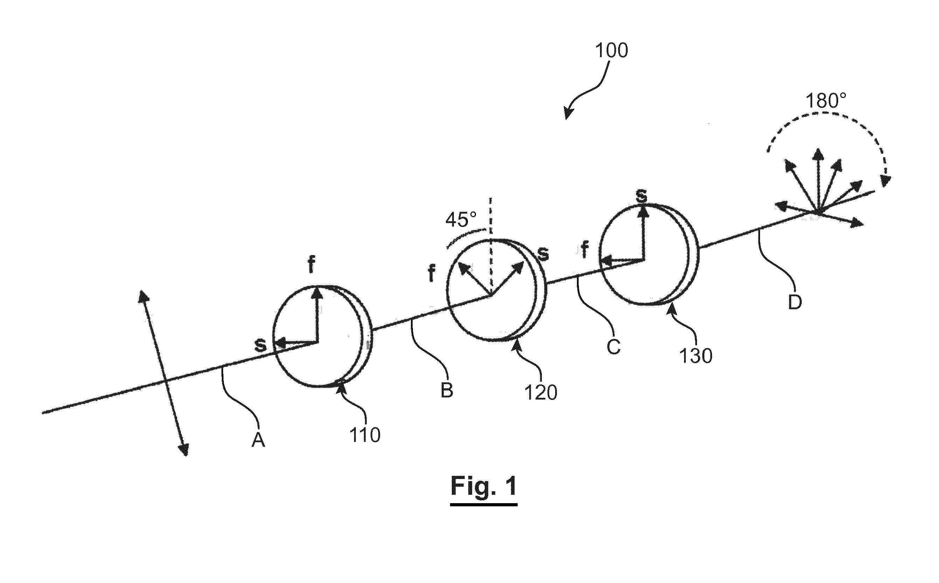

La structure de ce rotateur a été illustrée en Fig. 1.

Le rotateur de polarisation 100 comprend une première lame quart d'onde 110, une lame à retard variable à cristal liquide 120 et une seconde lame quart d'onde 130.

Ces différents éléments sont réalisés en un matériau biréfringent et pour chaque élément, on a désigné sur la figure par *s* l'axe lent et par *f* l'axe rapide. L'axe rapide de la seconde lame quart d'onde coïncide avec l'axe lent de la première et l'axe lent de la seconde lame quart d'onde coïncide avec l'axe rapide de la première. La bissectrice des lignes neutres (c'est-à-dire des axes lent et rapide, encore dénommés ci-après axes neutres) de la lame à retard variable est orientée de manière à être alignée sur un axe neutre des première et seconde lames quart d'onde.

On rappelle qu'en incidence normale, une lame quart d'onde transforme une onde incidente à polarisation rectiligne en une onde à polarisation elliptique dont les axes sont les axes neutres de cette lame.

Du fait de son orientation bissectrice, la lame à retard variable modifie l'ellipticité de cette polarisation sans modifier la direction de ses axes propres. La seconde lame quart d'onde transforme l'onde polarisée elliptiquement issue de la lame à retard 120 en une onde de sortie polarisée rectilignement puisque les axes propres de la polarisation coïncident avec ses axes neutres.

Ainsi, l'onde de sortie présente une polarisation rectiligne orientée selon une direction tournée par rapport à la direction de polarisation de l'onde incidente.

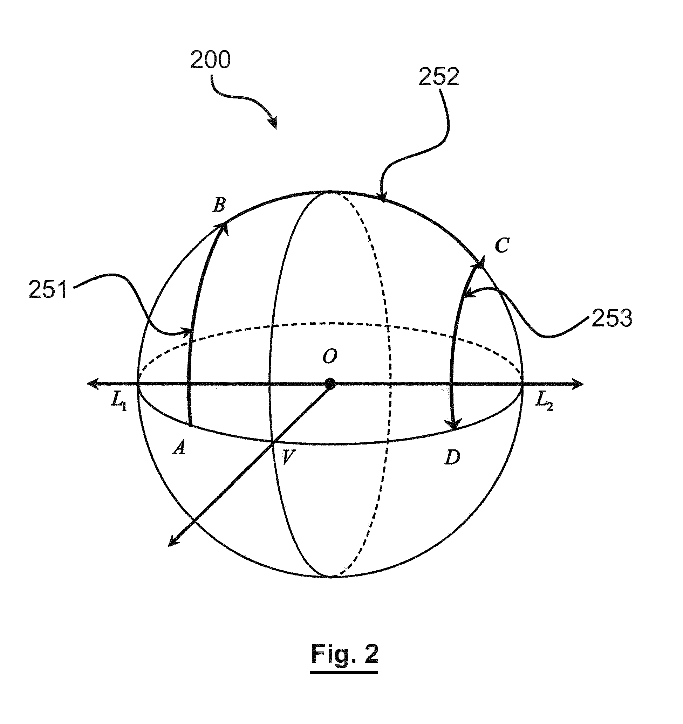

Le principe du rotateur de polarisation sera mieux compris à l'aide de la sphère de Poincaré illustrée en Fig. 2.

On rappelle que l'équateur de la sphère de Poincaré, 200, représente les polarisations rectilignes et les pôles les polarisations circulaires (droite et gauche). Tous les autres points de la sphère correspondent à des polarisations elliptiques. Lorsque l'on parcourt un méridien de la sphère, les axes propres de la polarisation restent inchangés, seule l'ellipticité varie.

L'effet d'un élément biréfringent sur une polarisation se traduit sur la sphère de Poincaré par une rotation autour d'un axe reliant deux points diamétralement opposés de la sphère, chacun représentant une polarisation rectiligne selon une ligne neutre (ou axe neutre) de l'élément en question. L'axe de rotation est noté OL₁ pour la première lame quart d'onde, OV pour la lame à retard variable et OL₂ pour la seconde lame quart d'onde. On notera que, du fait de l'orientation de la lame à retard variable en Fig. 1, la droite OV est orthogonale à la droite L₁L₂.

On a représenté sur la sphère de Poincaré la polarisation de l'onde incidente par le point A. Cette polarisation est de direction quelconque (le point A est situé en un point quelconque de l'équateur). Le point B correspond à la polarisation en sortie de la première lame quart d'onde. Il se déduit de A par une rotation autour de l'axe OL₁ (arc de cercle 251). Le point C correspond à la polarisation en sortie de la lame à retard variable 120. Il se déduit du point B par une rotation autour de l'axe OV (arc de cercle 252). L'angle de rotation (ou la longueur de l'arc de méridien) est fonction du retard introduit par la lame 120. Enfin, le point D correspond à la polarisation en sortie de la seconde lame quart d'onde. Il se déduit du point C par une rotation autour de l'axe OL₂. On notera que l'angle entre les droites OA et OD est égal au double de l'angle de rotation de la polarisation induite par le rotateur.

Le retard induit par la lame à retard variable, et donc la rotation de polarisation, est généralement fonction de la tension appliquée à la cellule de cristal liquide et de l'épaisseur de cette lame.

Le rotateur de polarisation de la Fig. 1 requiert cependant un alignement angulaire strict entre la première lame quart d'onde et la lame à retard variable d'une part, ainsi qu'entre cette dernière et la seconde lame quart d'onde, d'autre part. En effet, dès lors que la bissectrice des axes neutres de la lame à retard variable ne coïncide pas avec un axe neutre de la première ou de la seconde lame quart d'onde, on constate que la polarisation en sortie du rotateur (point D) est elliptique.

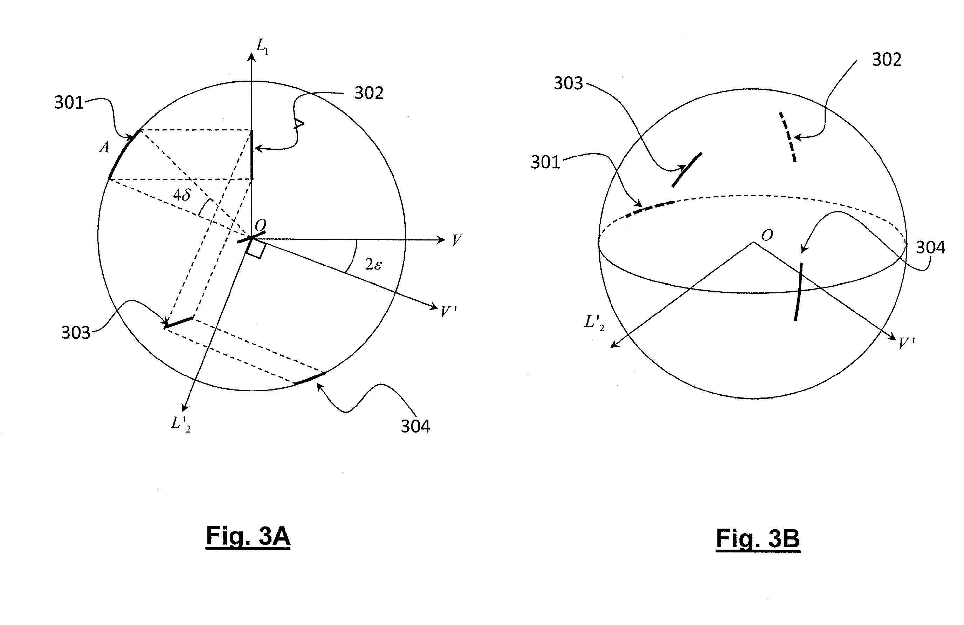

Cette sensibilité du rotateur de polarisation à une erreur de positionnement angulaire de la lame à retard variable par rapport à la première et/ou à la seconde lame quart d'onde sera mieux comprise à l'aide des Figs. 3A à 3C.

La Fig. 3A donne une vue de dessus de la sphère de Poincaré de la Fig. 2.

On y a représenté l'axe de rotation OL₁ relatif à la première lame quart d'onde, l'axe de rotation OV' relatif à la lame à retard variable et l'axe OL'₂ relatif à la seconde lame quart d'onde.

On a supposé pour simplifier que seule la première lame quart d'onde était désalignée d'un angle *ε* par rapport à la lame à retard variable. Ce désalignement se traduit par un écart angulaire de 2*ε* des axes OV' et OL'₂ par rapport aux axes nominaux OV et OL₂.

Par ailleurs, on a représenté une variation angulaire de ±*δ* de la direction de polarisation de l'onde incidente. Celle-ci se traduit par une plage angulaire 301 de la droite OA dans le plan équatorial de la sphère de Poincaré.

Par rotation de 90° autour de OL₁, la plage angulaire 301 est transformée en un arc de cercle 302 aligné selon le méridien de la sphère dont la projection sur l'équateur est confondue avec l'axe OL₁. On comprendra que l'arc 302 représente la plage de polarisation de l'onde en entrée de la lame à retard variable.

L'action de la lame à retard variable sur la polarisation de l'onde se traduit par une rotation de l'arc 302 autour de l'axe OV'. Cette rotation donne un arc 303 qui n'est plus orienté selon un méridien de la sphère, comme on peut le voir sur la vue en perspective de la Fig. 3B.

Enfin, l'action de la seconde lame quart d'onde se traduit par une rotation de 90° autour de l'axe OL'₂ dans le sens inverse de la rotation autour de l'axe OL₁. Celle-ci transforme l'arc de ce cercle 303 en un arc de cercle 304 s'étendant de part et d'autre du plan équatorial. Il en résulte que la polarisation de l'onde en sortie du rotateur peut présenter un degré non négligeable d'ellipticité.

De la même façon, un désalignement de la seconde lame quart d'onde par rapport à la lame à retard variable peut se traduire par une polarisation elliptique en sortie du rotateur.

La criticité d'un désalignement sur l'ellipticité résiduelle impose d'aligner les trois éléments du rotateur de polarisation sur un banc optique.

Le but de la présente invention est de proposer un rotateur de polarisation dépourvu des inconvénients précédents, c'est-à-dire présentant une bonne robustesse aux erreurs de positionnement angulaire entre ses éléments constitutifs et une faible ellipticité de polarisation en sortie.

### EXPOSÉ DE L'INVENTION

La présente invention est définie par un rotateur de polarisation comportant, le long d'un axe optique commun :
un premier bloc optique comprenant un polariseur rectiligne et une première lame quart d'onde, d'orientation fixe l'un par rapport l'autre, la direction de polarisation dudit polariseur étant bissectrice des axes neutres de la lame quart d'onde ;
un second bloc optique comprenant une lame à retard variable constituée par une lame à cristal liquide, et une seconde lame quart d'onde, d'orientation fixe l'une par rapport à l'autre, les axes neutres de la seconde lame quart d'onde étant bissecteurs des axes neutres de la lame à retard variable.

Avantageusement, l'orientation relative des premier et second blocs optiques autour de l'axe optique commun est réglable, et réglée de sorte que les axes lent et rapide de la première lame quart d'onde coïncident respectivement avec les axes rapide et lent de la seconde lame quart d'onde.

La lame à retard variable est de préférence une lame à cristal liquide, en particulier à cristal liquide nématique.

### BRÈVE DESCRIPTION DES DESSINS

D'autres caractéristiques et avantages de l'invention apparaîtront à la lecture de modes de réalisation préférentiels de l'invention fait en référence aux figures jointes parmi lesquelles :
La Fig. 1, déjà décrite, représente schématiquement un rotateur de polarisation à cristal liquide connu de l'état de la technique ;
La Fig. 2, déjà décrite, représente sur la sphère de Poincaré la polarisation d'une onde en différents points de l'axe optique du rotateur de polarisation de la Fig. 1 ;
Les Fig. 3A et 3B, déjà décrites, illustrent l'effet d'une erreur de positionnement angulaire sur la polarisation en sortie du rotateur de polarisation de la Fig. 1 ;
La Fig. 4 représente schématiquement un rotateur de polarisation selon un mode de réalisation de l'invention ;
La Fig. 5 représente sur la sphère de Poincaré la polarisation d'une onde en différents points de l'axe optique du rotateur de polarisation de la Fig. 3 ;
Les Fig. 6A à 6B illustrent l'effet d'une erreur de positionnement angulaire d'une lame quart d'onde sur la polarisation en sortie du rotateur de polarisation de la Fig. 4.

### EXPOSÉ DÉTAILLÉ DE MODES DE RÉALISATION PARTICULIERS

L'idée à la base de la présente invention est de diviser le rotateur de polarisation en deux blocs optiques, un premier bloc constitué par un polariseur et une première lame quart d'onde, et un second bloc constitué par la lame à retard variable et une seconde lame quart d'onde. Le polariseur est orienté de manière à ce que la direction de polarisation corresponde à la bissectrice des axes neutres de la première lame quart d'onde. Ainsi, dans le cas d'un alignement parfait, la polarisation en sortie de la première lame quart d'onde étant circulaire, l'orientation de la première lame quart d'onde par rapport à la lame à retard variable devient indifférente.

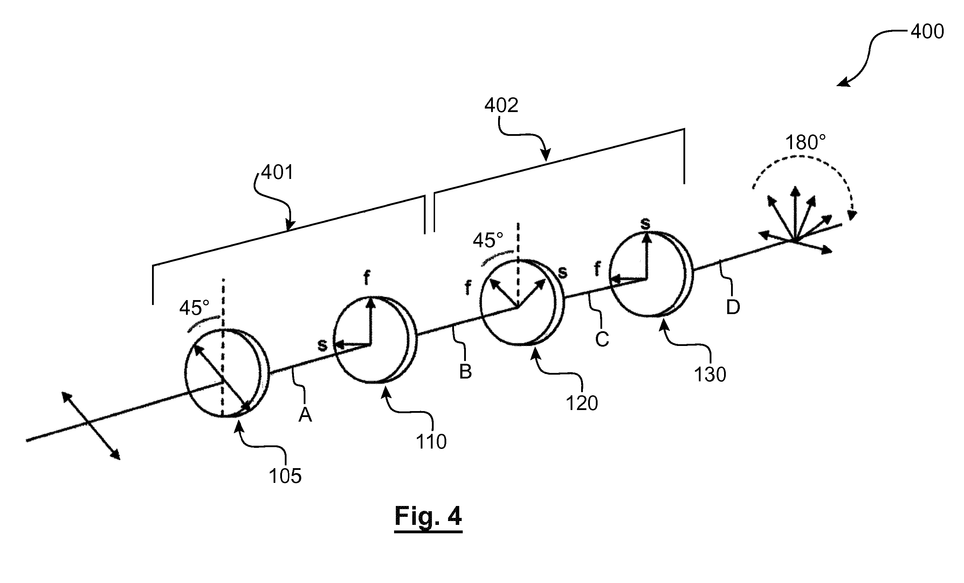

La Fig. 4 représente un rotateur de polarisation à cristal liquide selon un mode de réalisation de l'invention. Les éléments optiques identiques à ceux de la Fig. 1 portent les mêmes numéros de référence.

Ce rotateur, 400, se distingue tout d'abord de celui de la Fig. 1 par la présence d'un polariseur rectiligne 105 en amont de la première lame quart d'onde, 110.

Comme précédemment indiqué, le polariseur 105 et la première lame quart d'onde 110 forment un premier bloc optique 401. De même, la lame à retard variable, 120, et la seconde lame quart d'onde 130 forment un second bloc optique, 402. Par bloc optique, on entend un ensemble d'éléments optiques dont l'orientation relative atour de l'axe optique commun est fixe, par exemple au moyen d'une liaison mécanique entre ces éléments.

La direction de polarisation du polariseur 105 est orientée de sorte à coïncider avec la bissectrice des axes rapide et lent (axes neutres) de la première lame quart d'onde 110. Cette configuration présente deux avantages. Tout d'abord, la polarisation en sortie de la première lame quart d'onde étant circulaire, le second bloc optique (en particulier la lame à retard variable 120) peut être orienté de manière quelconque par rapport au premier bloc optique.

Ensuite, le premier bloc optique joue le rôle d'un isolateur optique. En effet, une réflexion en aval de la première lame quart d'onde (par exemple sur la face amont de la lame à retard variable 120) se traduit par une onde réfléchie, polarisée circulairement se propageant dans le sens inverse de l'onde incidente, onde réfléchie qui est transformée par cette même lame en une onde de polarisation rectiligne présentant une direction de polarisation orthogonale à celle du polariseur.

Au sein du second bloc optique, la seconde lame quart d'onde, 130, est montée de manière à ce que ses axes neutres (rapide et lent) soient chacun bissecteur des axes neutres de la lame à retard variable, 120.

La lame à retard variable est de préférence une lame à cristal liquide, par exemple à cristal liquide nématique.

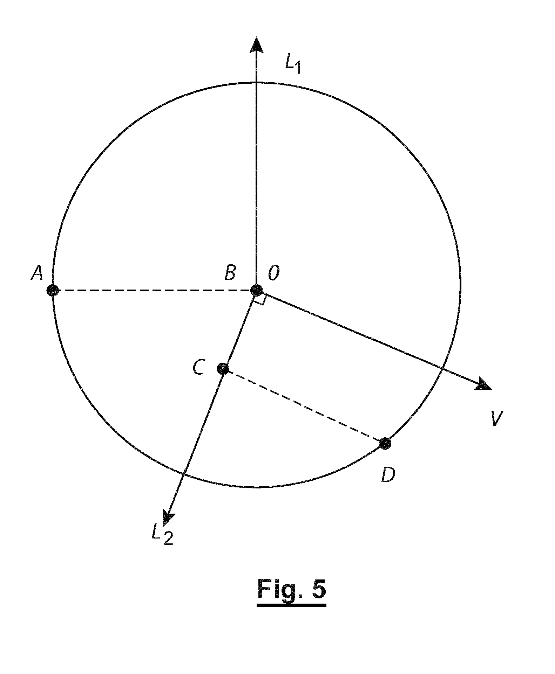

La Fig. 5 représente la polarisation de l'onde en différents points le long de l'axe du rotateur de polarisation.

La sphère de Poincaré est représentée ici en vue de dessus. La polarisation de l'onde en sortie du polariseur 105 est représentée par le point A. L'axe OA forme un angle de 90° avec l'axe de rotation OL₁ puisque la direction de polarisation en sortie du polariseur est à 45° des axes neutres de la première lame quart d'onde. Cet angle est fixe du fait que le polariseur et la première lame quart d'onde appartiennent au même bloc optique.

Après rotation de 90° autour de l'axe de rotation OL₁, le point B représentatif de la polarisation coïncide avec le pôle Nord de la sphère (polarisation circulaire).

Ce point fait ensuite l'objet d'une rotation autour de l'axe OV. Le point C transformé de B par cette rotation correspond à la polarisation de l'onde en sortie de lame à retard variable.

Enfin, l'action de la seconde lame quart d'onde se traduit par une rotation autour de l'axe OL₂, orthogonal à OV. Le point résultant, D, est situé sur l'équateur de la sphère de Poincaré. L'angle formé entre les axes OA et OD correspond au double de la rotation de la polarisation.

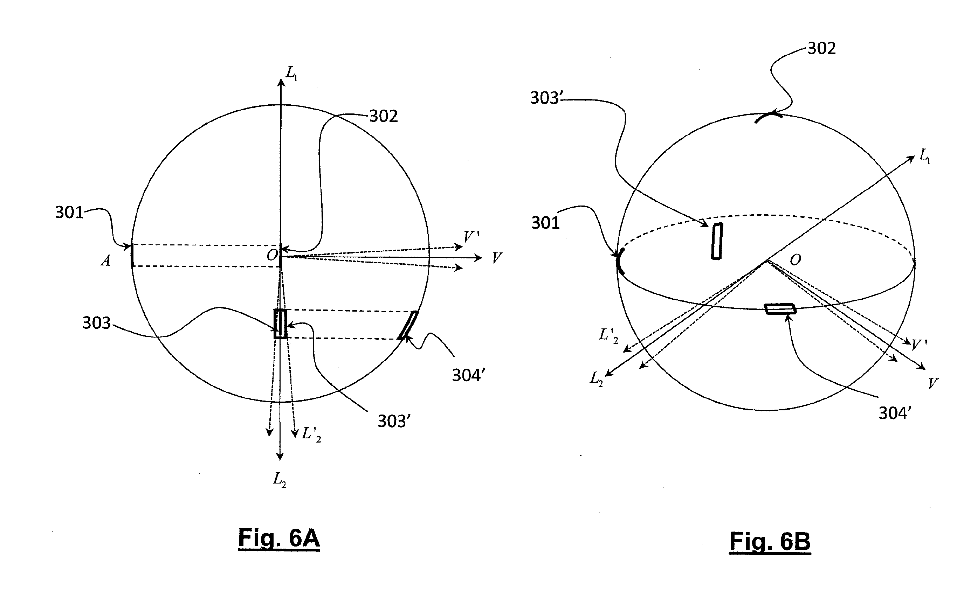

La robustesse de ce rotateur de polarisation aux erreurs de positionnement angulaire sera illustrée à l'aide des Figs. 6A et 6B.

La Fig. 6A donne une vue de dessus de la sphère de Poincaré. On a représenté à nouveau une plage angulaire 301 de la droite OA dans le plan équatorial de la sphère correspondant à une erreur éventuelle de l'orientation du polariseur d'entrée par rapport à la première lame quart d'onde au sein du premier bloc optique. Cette erreur d'orientation est faible puisqu'elle correspond à l'incertitude de la position angulaire de ces deux éléments lors du montage dans le premier bloc optique.

Comme indiqué sur la Fig. 6A, la rotation autour de l'axe OL₁ transforme la plage angulaire 301 en un arc de cercle 302, de faible amplitude angulaire, centré sur le pôle Nord et dont la projection sur le plan équatorial est alignée avec l'axe OL₁.

La lame à retard variable fait tourner cet arc de cercle autour de l'axe OV pour donner un arc de cercle 303.

Lorsque les premier et second blocs optiques sont alignés de manière à ce que l'axe lent de la première lame quart d'onde corresponde à l'axe rapide de la seconde lame quart d'onde (et réciproquement), l'axe OV est orthogonal à l'axe OL₁. Il en résulte que l'arc 303 est parfaitement aligné sur le méridien dont la projection sur le plan équatorial coïncide avec les axes OL₁ et OL₂. La rotation de l'arc 303 autour de l'axe OL₂ donne un arc de cercle 304 aligné sur l'équateur, autrement dit l'ellipticité de polarisation en sortie est nulle.

La Fig. 6B donne une vue en perspective de la sphère de Poincaré. On y a représenté les axes OL₁, OV et OL₂, la plage angulaire 301 correspondant à l'erreur de positionnement au sein du premier bloc optique, ainsi que l'arc 302 défini plus haut.

Lorsque les premiers et seconds blocs optiques ne sont pas alignés (désalignement de ±*δ* des axes OV et OL₂, indiqués en trait discontinu sur les Figs 6B et 6C) la rotation autour de l'OV conduit à une zone 303' centrée autour du méridien M, transformée par rotation autour de OL₂ en une zone 304' centrée autour de l'équateur. Lorsque les deux blocs optiques sont parfaitement alignés les zones 303' et 304' se confondent respectivement avec les arcs 303 et 304.

Ainsi, l'ellipticité de l'onde en sortie du rotateur de polarisation n'est que peu affectée par un désalignement angulaire entre les deux blocs optiques. On comprend en outre que l'effet de ce désalignement angulaire sur l'ellipticité de polarisation est d'autant plus faible que l'alignement au sein des premier et second blocs optiques est plus précis. En tout état de cause, du fait de la polarisation quasi-circulaire en sortie du premier bloc optique, l'effet d'un tel désalignement sur l'ellipticité de polarisation en sortie du rotateur est du second ordre par rapport à celui observé dans l'état de la technique.

Qui plus est, si le premier bloc présente un défaut d'alignement mais que les deux blocs optiques sont alignés, l'erreur sur l'ellipticité de polarisation en sortie du rotateur est encore du second ordre par rapport à celui observé dans l'état de la technique. Ainsi, la précision d'assemblage du premier bloc optique est relaxée. Seule importe en définitive la précision d'assemblage du second bloc optique.

## Revendications

1. Rotateur de polarisation, **caractérisé en ce qu'**il comporte, le long d'un axe optique commun :
un premier bloc optique (401) comprenant un polariseur rectiligne (205) et une première lame quart d'onde (210), d'orientation fixe l'un par rapport l'autre, la direction de polarisation dudit polariseur étant bissectrice des axes neutres de la lame quart d'onde ;
un second bloc optique (402) comprenant une lame à retard variable (220) constituée par une lame à cristal liquide, et une seconde lame quart d'onde (230), d'orientation fixe l'une par rapport à l'autre, les axes neutres de la seconde lame quart d'onde étant bissecteurs des axes neutres de la lame à retard variable.

2. Rotateur de polarisation selon la revendication 1, **caractérisé en ce que** l'orientation relative des premier et second blocs optiques autour de l'axe optique commun est réglable, et réglée de sorte que les axes lent et rapide de la première lame quart d'onde coïncident respectivement avec les axes rapide et lent de la seconde lame quart d'onde.

3. Rotateur de polarisation selon la revendication 1 ou 2, **caractérisé en ce que** la lame à retard variable est une lame à cristal liquide.

4. Rotateur de polarisation selon la revendication 3, **caractérisé en ce que** le cristal liquide est un cristal liquide nématique.
